# EUROPEAN PATENT APPLICATION

(11) **EP 4 432 082 A1**
(43) Date of publication of application: **18.09.2024**
(21) Application number: 22891720.9
(22) Date of filing: 12.10.2022
(51) Int. Cl.: G06F 9/48

(54) **NETWORK CARD PACKET RECEIVING PROCESSING METHOD AND APPARATUS**

(30) Priority: 09.11.2021 CN 202111322490
(71) Applicant: Jingdong Technology Information Technology Co., Ltd., Beijing 100176 (CN)
(72) Inventor: FANG, Dong, Beijing 100176 (CN); LIAO, Tianyu, Beijing 100176 (CN)
(74) Representative: FDST Patentanwälte
(86) International application number: PCT/CN2022/124839
(87) International publication number: WO 2023/082921

(57) **Abstract**

The disclosure provides a network card packet receiving processing method and apparatus. The method comprises: parsing received message data, and determining pre-fetching control information of a receiving queue corresponding to the message data; determining corresponding pre-fetched memory block scheduling information based on the pre-fetching control information; and performing a memory block pre-fetching scheduling operation on the receiving queue in a network card based on the pre-fetched memory block scheduling information, so as to generate a pre-fetching request to acquire corresponding memory block information. According to the network card packet receiving processing method provided in the disclosure, corresponding pre-fetched memory block scheduling information is generated by receiving pre-fetching control information corresponding to message data, and packet receiving scheduling among a plurality of receiving queues can be achieved based on the pre-fetched memory block scheduling information, which improves the pre-fetched memory block scheduling efficiency of a network card, thereby improving the performance of the whole network card in receiving the message data.

## Description

The application claims priority to CN Patent Application No. 2021113224903, entitled "Network Card Packet Receiving Processing Method and Apparatus", which was filed with China National Intellectual Property Administration on November 9, 2021, and the contents of which are hereby incorporated by reference in its entirety.

### Technical Field

The disclosure relates to the technical field of network communications, and specifically relates to a network card packet receiving processing method and apparatus. In addition, the disclosure also relates to an electronic device and a processor-readable storage medium.

### Background

Since there is a very long path and a very big time delay when a network card communicates with a computer host, the network card will generally pre-fetches memory block information that has been allocated in the host to a network card memory pool of the network card in advance, and the network card directly acquires memory block information to be currently used from the network card memory pool when receiving message data, and then writes the message data in a memory block of the computer in accordance with the memory block information. However, the current packet receiving scheduling manner implemented based on the traditional polling scheduling algorithm is comparatively low in terms of the efficiency. Thus, how to efficiently implement packet receiving scheduling among a plurality of queues has become an urgent problem to be solved.

### Summary

To this end, the disclosure provides a network card packet receiving processing method and apparatus to solve the problem existing in the prior art that a packet receiving scheduling solution implemented based on the traditional polling scheduling algorithm has comparatively high limitations, resulting in a defect that the network card packet receiving processing efficiency and stability are comparatively poor.

According to a first aspect of the disclosure, a network card packet receiving processing method is provided, the method comprising:
parsing received message data, and determining pre-fetching control information of a receiving queue corresponding to the message data;
determining corresponding pre-fetched memory block scheduling information based on the pre-fetching control information;
performing a memory block pre-fetching scheduling operation on the receiving queue in a network card based on the pre-fetched memory block scheduling information, so as to generate a pre-fetching request to acquire corresponding memory block information; and
storing the message data in a memory of a storage area based on the memory block information.

Further, determining corresponding pre-fetched memory block scheduling information based on the pre-fetching control information comprises:
acquiring a read pointer information and a write pointer information of a memory block pre-fetched by the receiving queue included in the pre-fetching control information; and
determining, in accordance with the read pointer information, the write pointer information and a pre-fetching pending flag bit, whether the current action of receiving the message data triggers a pre-fetching application action of the receiving queue, and if so, generating the corresponding pre-fetched memory block scheduling information.

Further, storing the message data in a memory of a storage area based on the memory block information comprises: determining, based on the read pointer information and the write pointer information, whether a memory block to be used exists in a specified storage area, and if so, determining, in accordance with the read pointer information, the write pointer information and a corresponding queue serial number, a storage position of the memory block information in a network card memory pool, and reading the memory block information in the storage position;
writing the message data in a specified memory block in the storage area based on the memory block information.

Further, performing a memory block pre-fetching scheduling operation on the receiving queue in a network card based on the pre-fetched memory block scheduling information, so as to generate a pre-fetching request to acquire corresponding memory block information comprises: performing the memory block pre-fetching scheduling operation on the receiving queue in the network card based on the pre-fetched memory block scheduling information, and triggering a pre-fetching application action corresponding to a sub-queue in the receiving queue, so as to generate the pre-fetching request to acquire the corresponding memory block information; the receiving queue including at least one sub-queue; wherein the pre-fetching request includes acquiring a corresponding number of pieces of memory block information in accordance with a preset threshold of a number of pieces of memory block information pre-fetched for a single time.

Further, the pre-fetching control information includes: a write pointer value for representing a number of pre-fetched memory blocks, a read pointer value for representing a number of memory blocks that have been used to receive the message data, a pre-fetching pending flag bit for representing the current pre-fetching state of the receiving queue, and a notification instruction flag bit for representing driving of memory blocks that have been allocated.

According to a second aspect of the disclosure, a network card packet receiving processing apparatus is provided, the apparatus comprising:
a pre-fetching control information acquisition unit for parsing received message data, and determining pre-fetching control information of a receiving queue corresponding to the message data;
a packet receiving processing unit for determining corresponding pre-fetched memory block scheduling information based on the pre-fetching control information;
a memory block pre-fetching management unit for performing a memory block pre-fetching scheduling operation on the receiving queue in a network card based on the pre-fetched memory block scheduling information, so as to generate a pre-fetching request to acquire corresponding memory block information;
a message data storage unit for writing the message data in a specified memory block of a storage area based on the memory block information.

Further, the packet receiving processing unit comprises:
a first packet receiving processing unit for acquiring a read pointer information and a write pointer information of a memory block pre-fetched by the receiving queue included in the pre-fetching control information; and
a third packet receiving processing unit for determining, in accordance with the read pointer information, the write pointer information and a pre-fetching pending flag bit, whether the current action of receiving the message data triggers a pre-fetching application action of the receiving queue, and if so, generating the corresponding pre-fetched memory block scheduling information.

Further, the packet receiving processing unit further comprises:
a second packet receiving processing unit for determining, based on the read pointer information and the write pointer information, whether a memory block to be used exists in a specified storage area, and if so, determining, in accordance with the read pointer information, the write pointer information and a corresponding queue serial number, a storage position of the memory block information in a network card memory pool, and reading the memory block information in the storage position.

Further, the memory block pre-fetching management unit is used for:
performing the memory block pre-fetching scheduling operation on the receiving queue in the network card based on the pre-fetched memory block scheduling information, and triggering a pre-fetching application action corresponding to a sub-queue in the receiving queue, so as to generate the pre-fetching request to acquire the corresponding memory block information; the receiving queue including at least one sub-queue; wherein the pre-fetching request includes acquiring a corresponding number of pieces of memory block information in accordance with a preset threshold of a number of pieces of memory block information pre-fetched for a single time.

Further, the pre-fetching control information includes: a write pointer value for representing a number of pre-fetched memory blocks, a read pointer value for representing a number of memory blocks that have been used to receive the message data, a pre-fetching pending flag bit for representing the current pre-fetching state of the receiving queue, and a notification instruction flag bit for representing driving of memory blocks that have been allocated.

According to a third aspect of the disclosure, an electronic device is provided, the electronic device comprising: a memory, a processor, and a computer program stored on the memory and executable on the processor, wherein the program, when executed by the processor, performs the steps of any network card packet receiving processing method as mentioned above.

According to a fourth aspect of the disclosure, a processor-readable storage medium, on which a computer program is stored, is provided, wherein the computer program, when executed by the processor, performs the steps of any network card packet receiving processing method as mentioned above.

The network card packet receiving processing method provided by the disclosure generates corresponding pre-fetched memory block scheduling information by receiving pre-fetching control information corresponding to message data, and can achieve pre-fetched buf scheduling among a plurality of receiving queues based on the pre-fetched memory block scheduling information, which improves the pre-fetched buf scheduling efficiency of the network card, thereby improving the performance of the whole network card in receiving the message data.

### Brief Description of the Drawings

In order to more clearly describe the technical solutions in the embodiments of the disclosure or the prior art, figures to be used in the descriptions of the embodiments or the prior art will be briefly introduced below. It is apparent that the figures in the descriptions below are only some embodiments of the disclosure, and those skilled in the art may also obtain other figures based on these figures without making inventive efforts.
FIG. 1 is a schematic diagram of a flow of a network card packet receiving processing method according to an embodiment of the disclosure;
FIG. 2 is a schematic diagram of a complete flow of a network card packet receiving processing method according to an embodiment of the disclosure;
FIG. 3 is a schematic diagram of a network card packet receiving processing process according to an embodiment of the disclosure;
FIG. 4 is a schematic diagram of a table entry structure of desc_bufs pre-fetched by a network card according to an embodiment of the disclosure;
FIG. 5 is a schematic diagram of a structure of a network card packet receiving processing apparatus according to an embodiment of the disclosure; and
FIG. 6 is a schematic diagram of a physical structure of an electronic device according to an embodiment of the disclosure.

### Detailed Description

In order to make the object, technical solution and advantages of the embodiments of the disclosure be easy to understand, the technical solutions in the embodiments of the disclosure will be clearly and completely described below by taking the figures in the embodiments of the disclosure into consideration. It is apparent that the described embodiments are part of the embodiments of the disclosure, rather than all of the embodiments. All of the other embodiments obtained by those skilled in the art based on the embodiments in the disclosure without making inventive efforts fall within the scope of protection of the disclosure.

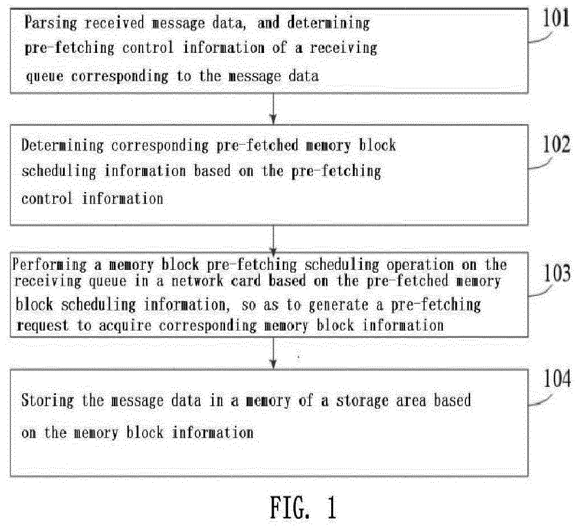

The embodiments of the disclosure are described in detail below based on the network card packet receiving processing method of the disclosure. As shown in FIG. 1, which is a schematic diagram of a flow of a network card packet receiving processing method provided by an embodiment of the disclosure, the specific implementation process comprises the following steps:
Step 101: Parsing received message data, and determining pre-fetching control information of a receiving queue corresponding to the message data.

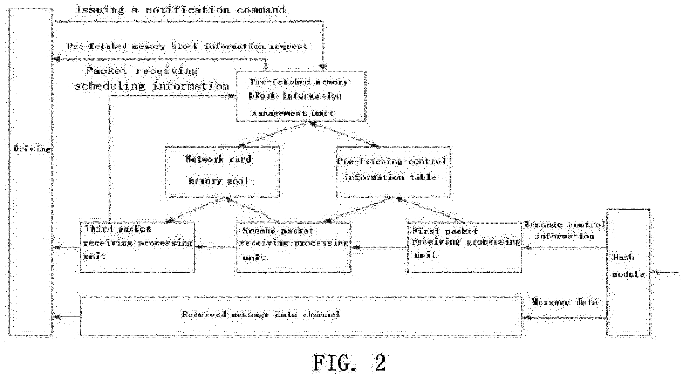

In the embodiment of the disclosure, it is required to parse the received message data in advance by a hash module (i.e., pkt_hash module), and calculate a receiving queue to which the message data is to be sent by means of a hash algorithm. Then, the received original message data is sent to a message data channel (called Rx_pkt_data), and message control information obtained after the parsing and the calculation is sent to a control channel (i.e., the first/second/third packet receiving processing unit in FIG. 2). A preset first packet receiving processing unit (called Rx_act1) looks up the pre-fetched memory block control information table in accordance with the calculated queue to determine the pre-fetching control information corresponding to the message data. The pkt_hash module is used for performing parsing of the message data and a hash calculation.

There, each receiving queue corresponds to corresponding pre-fetching control information, and the pre-fetching control information is stored in a preset pre-fetched memory block control information table (called Rx_buf_ctl_tbl). The pre-fetching control information includes but is not limited to: a write pointer value for representing a number of pre-fetched memory blocks (i.e., write pointer, called wptr), a read pointer value for representing a number of memory blocks that have been used to receive the message data (i.e., read pointer, called rptr), a pre-fetching pending flag bit for representing the current pre-fetching state of the receiving queue (called pending), and a notification instruction flag bit for representing driving of memory blocks that have been allocated (called ntf). Each receiving queue may store information (i.e., desc_buf information) of 32 or 64 memory blocks (called desc_buf). It should be noted that in the embodiment of the invention, the number of pieces of memory block information stored in each receiving queue may be set according to actual requirements, and no specific limitations are given herein. Where, each memory block information includes but is not limited to the address information of the memory block (called desc_buf_addr), the size of the memory block (called desc_buf_len), and the serial number of the memory block in the queue (called desc_buf_idx). The memory block information pre-fetched back by the receiving queue is stored in the local memory pool of the network card. The network card memory pool is just the local buffer pool of the network card (also called buf pool, i.e., Rx_buf TBL), and the buf pool is stored in the local random access memory (RAM) of the network card.

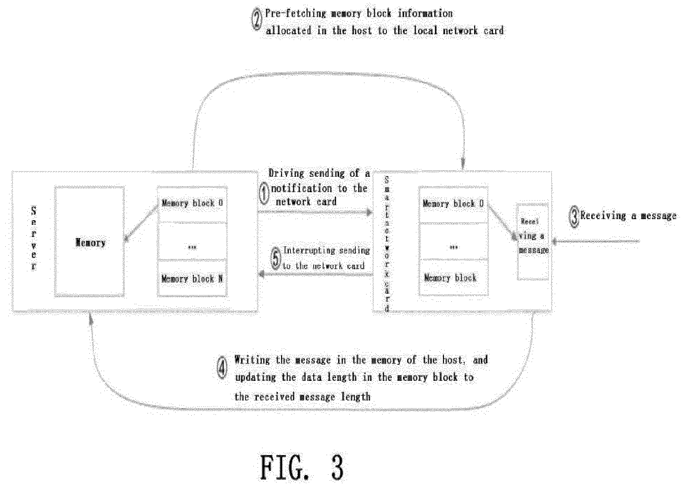

In the embodiment of the disclosure, since there is a very long path and a very big time delay when the network card communicates with a specified storage area (e.g., the server in FIG. 3) by means of a PCIE (peripheral component interconnect express) interface, the network card is required to pre-fetch memory block information that has been allocated in the specified storage area to the network card memory pool in advance to form the receiving queue for storing the memory block information in advance. The network card may directly acquire memory block information to be currently used from the network card memory pool when receiving message data, and then may write the message data in the corresponding memory block in the specified storage area by means of the PCIE interface in accordance with the memory block information to improve the packet receiving performance.

Wherein, the process of the network card pre-fetching the memory block information to the network card memory pool includes: after allocating the memory blocks in the memory of the specified storage area by means of a driver programm preset in the specified storage area, the network card acquires a notification instruction issued by the driver programm, which notification instruction is used for representing that the network card may perform the packet receiving operation. In the specific implementation process, when receiving the notification instruction, the memory block pre-fetching management unit (called Rx_buf_mng) in the network card looks up the pre-fetched memory block control information table by means of the queue serial number (called qid). If it is obtained by calculation after the lookup that the number of the free memory blocks in the queue is greater than or equal to 16 (wptr-rptr>=16), and the pending flag bit is 0, a request for pre-fetching memory block information is initiated once, and then the notification instruction flag bit (i.e., ntf flag bit) and the pre-fetching pending flag bit (called a pending flag bit) in the pre-fetching control information corresponding to the corresponding receiving queue are both set to 1, which are written back to the corresponding pre-fetched memory block control information table; otherwise, only the ntf flag bit of the receiving queue is set to 1, which is written back to the pre-fetched memory block control information table. After receiving a buf pre-fetching request from the third packet receiving processing unit (called Rx_act3), the memory block pre-fetching management unit looks up the pre-fetched memory block control information table by means of the queue serial number. If it is obtained that the number of the free memory blocks in the receiving queue is greater than or equal to 16 (wptr-rptr>=16), and the ntf flag bit is 1 and the pending flag bit is 0, a buf pre-fetching request, i.e., a pre-fetching notification command request, is initiated once, and then the ntf flag bit and the pending flag bit are both set to 1, which are written back to the pre-fetched memory block control information table; otherwise, the idle state is returned to and no processing is performed.

Step 102: Determining corresponding pre-fetched memory block scheduling information based on the pre-fetching control information.

As shown in FIG. 2, in the specific implementation process, the network card acquires the read pointer information and the write pointer information of the memory block pre-fetched by the receiving queue included in the pre-fetching control information by the preset first packet receiving processing unit; and the network card can determine, in accordance with the read pointer information, the write pointer information and the pre-fetching pending flag bit of the corresponding receiving queue in the pre-fetching control information, whether the current action of receiving the message data triggers a pre-fetching application action of the receiving queue by the preset third packet receiving processing unit, and if so, it generates the corresponding pre-fetched memory block scheduling information. Wherein, the read pointer information includes the read pointer value, i.e., the rptr value; the write pointer information includes the write pointer value, i.e., the wptr value. The pre-fetched memory block scheduling information refers to the pre-fetched buf scheduling information produced in accordance with the packet receiving action, and may include which sub-queues of the receiving queue are in normal working states, the value of the pre-fetching pending flag bit, and so on.

In addition, after acquiring the read pointer information and the write pointer information, the network card may also determine whether a memory block to be used exists in the specified storage area by the preset third packet receiving processing unit (called Rx_act3) based on the read pointer information and the write pointer information, and if so, the network card determines, in accordance with the read pointer information, the write pointer information and the corresponding queue serial number, a storage position of the memory block information in the network card memory pool, and reads the memory block information in the storage position; and writes the message data in the corresponding memory block in the specified storage area in accordance with the memory block information. If no memory block to be used exists, the received message data is discarded.

For example, in the specific implementation process, when there is message data coming in from the interface of the network card, the processing flow is as follows:
First, the received message data is parsed by the pkt_hash module, and the serial number qid on the receiving queue to which the message is to be sent is calculated by means of the hash algorithm. The wptr value and rptr value corresponding to the corresponding receiving queue are acquired and sent to the Rx_act2 by looking up the pre-fetched memory block control information table in accordance with the qid by the Rx_act1. It is calculated whether there is an available desc_buf in accordance with the wptr value and rptr value by the Rx_act2. If there is an available desc_buf, the storage position of the desc_buf in the buf pool is calculated in accordance with the qid, the wptr value and the rptr value, and the corresponding desc_buf information is read. The desc_buf information is sent to the Rx_act3, and the rptr value is updated to rptr+1, which represents that 1 desc_buf is consumed, and is written back to the pre-fetched memory block control information table Rx_buf_ctl_tbl. If there is no available desc_buf, the Rx_act3 is notified that there is no available desc_buf. When an available desc_buf is found by the Rx_act3, the received message data is written in the corresponding memory block in the specified storage area in accordance with the desc_buf information that is read back; if there is no available desc_buf, the message data received this time is discarded. The Rx_act3 calculates whether the packet receiving this time triggers a new desc_buf pre-fetching request operation in accordance with the wptr value, the rptr value and the flag_pending value of the current receiving queue, and if the desc_buf pre-fetching request operation is triggered, the pre-fetched memory block scheduling information (pre-fetching scheduling information) is sent to the memory block pre-fetching management unit, which performs the pre-fetching operation; if it is not required to pre-fetch the desc_buf, no pre-fetching processing is performed. In this way, each time the packet receiving scheduling is performed, it will be determined whether it is required to newly pre-fetch the desc_buf to ensure that the desc_buf pre-fetching request operation of the receiving queue is a valid application.

When the network card pre-fetches the buf and after then, the specific processing is as follows:
When the desc_buf is pre-fetched back, the pre-fetched memory block control information table is looked up in advance in accordance with the qid. If empty data is pre-fetched back (i.e., flag_av_empty is 1), it means that there is no desc_buf available for the memory block queue in the specified storage area, so the ntf flag bit in the pre-fetching control information of the receiving queue corresponding to the qid is cleared to 0, which is written back to the pre-fetched memory block control information table. If the desc_buf pre-fetched back is valid data and is not the last one of the 16 desc_bufs pre-fetched this time, the position in which the desc_buf is to be placed in the buf pool is calculated in accordance with the value of the qid and the value of the wptr. The desc_buf information is written in the corresponding storage position of the buf pool (Rx_buf Tbl), and the wptr value is updated to wptr+1 , which means that the network card has one available desc_buf, and is written back to the pre-fetched memory block control information table Rx_buf_ctl_tbl. If the desc_buf pre-fetched back is valid buf data and is the last one of the desc_bufs pre-fetched this time, the desc_buf is written in the buf pool, i.e., the corresponding desc_buf is stored in the receiving queue of the buf pool. In the actual implementation process, it is also required to calculate whether the number of the free positions in the buf pool is greater than or equal to 16, and if it is greater than or equal to 16, a new pre-fetching operation is continued to be performed, and the wptr value is updated to wptr+1 and the pending value is updated to 1 (i.e., the pending flag bit is 1), which are written back to the pre-fetched memory block control information table; if it is less than 16, which is not enough to perform pre-fetching once, the wptr value is directly updated to wptr+1 and the pending value is updated to 0 (i.e., the pending flag bit is 0), which are written back to the pre-fetched memory block control information table. It should be noted that each desc_buf has corresponding desc_buf information in the receiving queue of the buf pool of the network card. The desc_buf information includes but is not limited to the address information of the memory block, the size of the memory block, and the serial number of the memory block in the queue.

Step 103: Performing a memory block pre-fetching scheduling operation on the receiving queue in a network card based on the pre-fetched memory block scheduling information, so as to generate a pre-fetching request to acquire corresponding memory block information.

In the embodiment of the disclosure, the network card triggers a pre-fetching application action corresponding to the receiving queue in accordance with the pre-fetched memory block scheduling information produced by the packet receiving action based on the memory block pre-fetching management unit (called Rx_buf_mng), so as to generate the pre-fetching request to acquire the corresponding memory block information. The receiving queue includes at least one sub-queue. Wherein,the pre-fetching request includes acquiring a corresponding number of pieces of memory block information in accordance with a preset threshold of a number of pieces of memory block information pre-fetched for a single time.

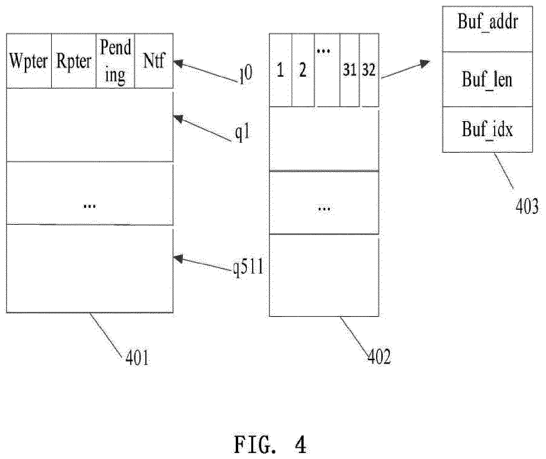

In order to improve the pre-fetching efficiency for a single time, the maximum number of buffer memories desc_bufs in each receiving queue in the network card may be increased to 64, and the desc_buf information of 16 memory blocks is acquired by setting the minimum number threshold of the desc_bufs pre-fetched for a single time to the desc_buf information of 16 memory blocks, i.e., a threshold of a number of pieces of memory block information pre-fetched for a single time. It should be noted that the maximum number of buffer memories desc_bufs in each receiving queue and the minimum number threshold of the desc_bufs pre-fetched for a single time, which include but are not limited to the values in the aforesaid examples, may be set according to actual requirements, and no specific limitations are given herein. In the specific implementation process, as shown in FIG. 4, there may be 512 sub-queues (i.e., q0-q511 sub-queues) in the network card, and each receiving queue has corresponding pre-fetching control information. desc_buf information 403 pre-fetched back is placed in a local buf pool 402 (Rx_buf TBL) of the network card, and the control information of each receiving queue is placed in a pre-fetched memory block control information table 401 (Rx_buf ctl tbl). Wherein,the meanings of the values of the fields included in the Rx_buf_ctl_tbl and the Rx_buf TBL are as follows: Ntf: 1 means driving of the desc_bufs that have been allocated, 0 means no desc_bufs are allocated to driving; Pending: 1 means that the queue is in a state of waiting for the desc_buf pre-fetched back, 0 means that the queue is not subjected to a pre-fetching operation; Wptr: the number of desc_bufs pre-fetched back; Rptr: the number of desc_bufs consumed to receive messages; Buf_addr: the starting address of the memory block in the computer host; Buf_len: the length of the memory block; Buf_idx: the serial number of the memory block in the queue.

It should be noted that the embodiment of the disclosure determines whether to perform a buf pre-fetching application action in the current packet receiving action based on the pre-fetching control information carried during the packet receiving. That is, after determining the pre-fetched memory block scheduling information, the pre-fetched buf scheduling processing is triggered based on the packet receiving action, which has a higher scheduling efficiency than the scheduling manner using round-robing polling. The traditional round-robing polling scheduling algorithm is that the queue q1 is scheduled after the queue q0 is scheduled, the queue q2 is scheduled after the queue q1 is scheduled, and so on. Accordingly, when the round-robing scheduling manner is used, there will be a case of empty scheduling, e.g., even when only the queue q0 is operating, the queue q0 will be scheduled again after the queues q1-q55 have been scheduled, which results in a low scheduling efficiency. In the embodiment of the disclosure, the scheduling operation of triggering a pre-fetched memory block information request based on the packet receiving action can solve the empty scheduling problem that occurs in the traditional round-robing polling scheduling, thereby ensuring that the scheduling among the receiving queues each time is a valid scheduling.

The optimized architecture of the embodiment of the disclosure is as shown in FIG. 2, in which the other parts than the driving part are implemented with logic in the FPGA of the network card. The memory block pre-fetching management unit, i.e., the Rx_buf_mng module or the pre-fetched desc_buf management module, is used for performing the scheduling operation of the pre-fetched memory block information request, writing the memory block information pre-fetched back in the buf pool of the network card, processing the pre-fetching control information of each receiving queue, and so on. The Rx_act1, the Rx_act2, and the Rx_act3 are the first packet receiving processing unit (i.e., a message control information processing unit), the second packet receiving processing unit, and the third packet receiving processing unit for receiving the message data, respectively. That is, the packet receiving processing process is performed by three units, which facilitates pipeline operations and improves the packet receiving performance of the system. After receiving the message data, the first packet receiving processing unit inquires the pre-fetching control information of the corresponding receiving queue, acquires the wptr value and the rptr value, and determines by calculation whether there is an available desc_buf for the message data. If there is an available desc_buf, the second packet receiving processing unit acquires the corresponding desc_buf information from the buf pool and delivers it to the third packet receiving processing unit. The third packet receiving processing unit writes the message data in the corresponding memory block in the specified storage area in accordance with the acquired desc_buf information, and sends an interrupt signal to the specified storage area to notify the specified storage area of the completion of the packet receiving. Further, the third packet receiving processing unit obtains by calculation the number of free positions in the buf pool of the corresponding receiving queue in accordance with the delivered wptr value and rptr value, thereby determining whether a new desc_buf pre-fetching operation may be performed, and if pre-fetching is possible, the pre-fetched information (i.e., pre-fetched memory block scheduling information) is sent to the memory block pre-fetching management unit, and a pre-fetching application operation is triggered by the memory block pre-fetching management unit. If the number of the free positions in the buf pool is not enough to perform pre-fetching once, no pre-fetching information is sent to the memory block pre-fetching management unit during the packet receiving this time.

Step S104: Storing the message data in a memory of a storage area based on the memory block information.

Specifically, the received message data may be stored in the memory of the storage area based on the memory block information by the third packet receiving processing unit.

The network card packet receiving processing method according to the embodiment of the disclosure generates corresponding pre-fetched memory block scheduling information by receiving pre-fetching control information corresponding to message data, and can achieve pre-fetched buf scheduling among a plurality of receiving queues based on the pre-fetched memory block scheduling information, which improves the pre-fetched buf scheduling efficiency of the network card, thereby improving the performance of the whole network card in receiving the message data.

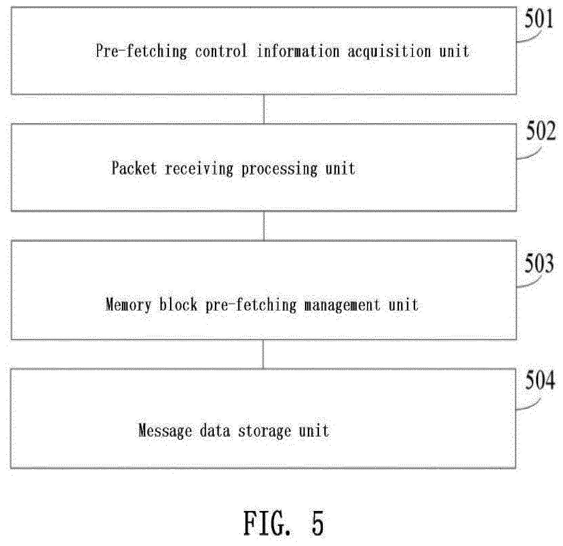

Corresponding to the network card packet receiving processing method provide above, the disclosure also provides a network card packet receiving processing apparatus. Since the embodiment of the apparatus is similar to the aforesaid method embodiment, it is described in a comparatively simple manner, and for relevant parts, please refer to the descriptions of the aforesaid method embodiment. The embodiment of the network card packet receiving processing apparatus described below is only schematic. Please refer to FIG. 5, which is a schematic diagram of a structure of a network card packet receiving processing apparatus according to an embodiment of the disclosure.

The network card packet receiving processing apparatus according to the disclosure comprises the following portions:
a pre-fetching control information acquisition unit 501 for parsing received message data, and determining pre-fetching control information of a receiving queue corresponding to the message data;
a packet receiving processing unit 502 for determining corresponding pre-fetched memory block scheduling information based on the pre-fetching control information;
a memory block pre-fetching management unit 503 for performing a memory block pre-fetching scheduling operation on the receiving queue in a network card based on the pre-fetched memory block scheduling information, so as to generate a pre-fetching request to acquire corresponding memory block information; and
a message data storage unit 504 for storing the message data in a memory of a storage area based on the memory block information.

Further, the packet receiving processing unit comprises:
a first packet receiving processing unit for acquiring a read pointer information and a write pointer information of a memory block pre-fetched by the receiving queue included in the pre-fetching control information; and
a third packet receiving processing unit for determining, in accordance with the read pointer information, the write pointer information and a pre-fetching pending flag bit, whether the current action of receiving the message data triggers a pre-fetching application action of the receiving queue, and if so, generating the corresponding pre-fetched memory block scheduling information.

Further, the network card packet receiving processing apparatus further comprises: a second packet receiving processing unit for determining, based on the read pointer information and the write pointer information, whether a memory block to be used exists in a specified storage area after acquiring the read pointer information and the write pointer information, and if so, determining, in accordance with the read pointer information, the write pointer information and a corresponding queue serial number, a storage position of the memory block information in a network card memory pool, and reading the memory block information in the storage position; the third packet receiving processing unit being further used for writing the message data in the corresponding memory block in the specified storage area based on the memory block information.

Further, in the network card packet receiving processing apparatus, the second packet receiving processing unit is further used for updating the read pointer value in the read pointer information after writing the message data in the corresponding memory block in the specified storage area in accordance with the memory block information, so as to obtain a target read pointer value corresponding to the number of current pre-fetched memory blocks; the target read pointer value being greater than the read pointer value; wherein the memory block information is in a one-to-one corresponding relationship with the memory blocks in the specified storage area.

Further, the memory block pre-fetching management unit is used for: performing the memory block pre-fetching scheduling operation on the receiving queue in the network card based on the pre-fetched memory block scheduling information, and triggering a pre-fetching application action corresponding to a sub-queue in the receiving queue, so as to generate the pre-fetching request to acquire the corresponding memory block information; the receiving queue including at least one sub-queue;
wherein the pre-fetching request includes acquiring a corresponding number of pieces of memory block information in accordance with a preset threshold of a number of pieces of memory block information pre-fetched for a single time.

Further, the pre-fetching control information includes: a write pointer value for representing a number of pre-fetched memory blocks, a read pointer value for representing a number of memory blocks that the received the message data has been used, a pre-fetching pending flag bit for representing the current pre-fetching state of the receiving queue, and a notification instruction flag bit for representing driving of memory blocks that have been allocated.

In the specific implementation process, it is required to parse the received message data in advance by the pkt_hash module, and calculate a receiving queue to which the message data is to be sent by means of a hash algorithm. Then, the received original message data is sent to a message data channel (called Rx_pkt_data), and message control information obtained after the parsing and the calculation is sent to a control channel (i.e., the first/second/third packet receiving processing unit in FIG. 2). After receiving the message data, the preset first packet receiving processing unit inquires the pre-fetching control information of the corresponding receiving queue, and acquires the read pointer value and the write pointer value of the receiving queue in the pre-fetching control information, determines whether there is a corresponding memory block in the specified storage area based on the read pointer value and the write pointer value; if there is a corresponding memory block, the second packet receiving processing unit acquires the corresponding memory block information from the buf pool and sends the memory block information to the third packet receiving processing unit; the third packet receiving processing unit writes the message data in the corresponding memory block in the specified storage area based on the memory block information, and sends an interrupt signal for representing the completion of the packet receiving to the specified storage area.

The network card packet receiving processing apparatus according to the embodiment of the disclosure generates corresponding pre-fetched memory block scheduling information by receiving pre-fetching control information corresponding to message data, and can achieve pre-fetched buf scheduling among a plurality of receiving queues based on the pre-fetched memory block scheduling information, which improves the pre-fetched buf scheduling efficiency of the network card, thereby improving the performance of the whole network card in receiving the message data.

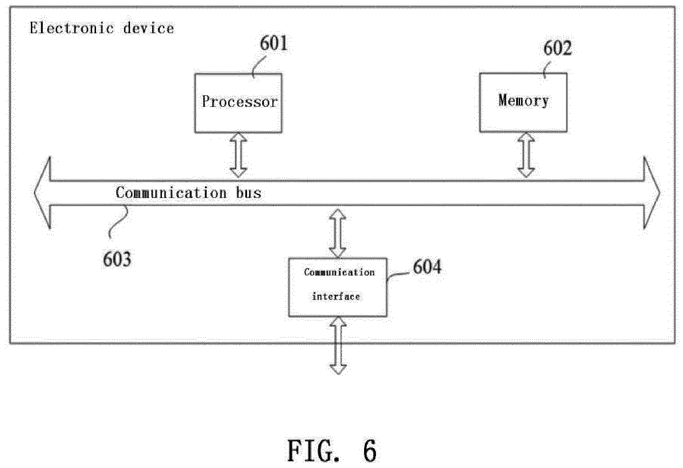

Corresponding to the network card packet receiving processing method provide above, the disclosure also provides an electronic device. Since the embodiment of the electronic device is similar to the aforesaid method embodiment, it is described in a comparatively simple manner, and for relevant parts, please refer to the descriptions of the aforesaid method embodiment. The embodiment of the electronic device described below is only schematic. As shown in FIG. 6, which is a schematic diagram of a physical structure of an electronic device according to an embodiment of the disclosure, the electronic device may comprise: a processor 601, a memory 602 and a communication bus 603, wherein the processor 601 and the memory 602 communicate with each other via the communication bus 603, and communicate with the external device via a communication interface 604. The processor 601 may call logical instructions in the memory 602 to perform a network card packet receiving processing method, the method comprising: parsing received message data, and determining pre-fetching control information of a receiving queue corresponding to the message data; determining corresponding pre-fetched memory block scheduling information based on the pre-fetching control information; performing a memory block pre-fetching scheduling operation on the receiving queue in a network card based on the pre-fetched memory block scheduling information, so as to generate a pre-fetching request to acquire corresponding memory block information; and storing the message data in a memory of a storage area based on the memory block information.

In addition, when the aforesaid logical instructions in the memory 602 may be implemented in the form of software functional units and may be sold or used as an independent product, they may be stored in a computer-readable storage medium. Based on such understanding, the technical solutions of the disclosure may be essentially, or the parts of the technical solutions of the disclosure contributing to the prior art or the parts of the technical solutions may be embodied in the form of a software product, which computer software product is stored in a storage medium, including several instructions for causing a computer device (which may be a personal computer, a computer, a network device, or the like) to perform all or part of the steps of the method of the respective embodiments. The aforesaid storage medium includes: a memory chip, a U disk, a mobile hard disk, a read-only memory (ROM), a random access memory (RAM), a magnetic disk, an optical disks, or any other medium that may store a program code.

According to another aspect, the embodiment of the disclosure also provides a computer program product, comprising a computer program stored on a processor-readable storage medium, which computer program includes program instructions, wherein when the program instructions are executed by the computer, the computer can perform the network card packet receiving processing method provided by the aforesaid respective method embodiments. The method comprises: parsing received message data, and determining pre-fetching control information of a receiving queue corresponding to the message data; determining corresponding pre-fetched memory block scheduling information based on the pre-fetching control information; performing a memory block pre-fetching scheduling operation on the receiving queue in a network card based on the pre-fetched memory block scheduling information, so as to generate a pre-fetching request to acquire corresponding memory block information; and storing the message data in a memory of a storage area based on the memory block information.

According to a further aspect, the embodiment of the disclosure also provides a processor-readable storage medium, on which a computer program is stored, wherein the computer program, when executed by the processor, performs the network card packet receiving processing method provided by the aforesaid respective embodiments. The method comprises: parsing received message data, and determining pre-fetching control information of a receiving queue corresponding to the message data; determining corresponding pre-fetched memory block scheduling information based on the pre-fetching control information; performing a memory block pre-fetching scheduling operation on the receiving queue in a network card based on the pre-fetched memory block scheduling information, so as to generate a pre-fetching request to acquire corresponding memory block information; and storing the message data in a memory of a storage area based on the memory block information.

The processor-readable storage medium may be any available medium that may be accessed by a processor or data storage device, including but not limited to a magnetic memory (such as a soft disk, a hard disk, a magnetic tape, a magnetooptical disk (MO), etc.), an optical memory (such as CD, DVD, BD, HVD, etc.), and a semiconductor memory (such as ROM, EPROM, EEPROM, a non-volatile memory (NAND FLASH), a solid state drive (SSD), etc.).

The apparatus embodiments described above are only schematic. The units described as separate components may or may not be physically separated, and the components shown as units may or may not be physical units, i.e., they may be located in one place or distributed to a plurality of network units. Part or all of the units may be selected according to actual requirements to achieve the purpose of the solution of the embodiment. Those skilled in the art can achieve the understanding and implementation without making inventive efforts.

By means of the above descriptions of the embodiments, those skilled in the art may clearly understand that the respective embodiments may be implemented by software plus a necessary general hardware platform, and of course, they may also be implemented by hardware. Based on such understanding, the aforesaid technical solutions may be essentially, or the parts of the technical solutions contributing to the prior art may be embodied in the form of a software product, which computer software product may be stored in a computer-readable storage medium, such as ROM/RAM, a magnetic disk, an optical disk, etc., including several instructions for causing a computer device (which may be a personal computer, a computer, a network device, or the like) to perform the method of the respective embodiments or some parts of the embodiments.

Finally, it should be noted that the above embodiments are only used for describing the technical solutions of the disclosure rather than making limitations thereof; although the disclosure is described in detail with reference to the aforesaid embodiments, those skilled in the art should understand that they may still make modifications of the technical solutions recorded in the aforesaid respective embodiments or make equivalent substitutions of parts of the technical features therein; and these modifications or substitutions will not make the essence of the corresponding technical solutions break away from the spirit and scope of the technical solutions of the respective embodiments of the disclosure.

## Claims

1. A network card packet receiving processing method, comprising:
parsing received message data, and determining pre-fetching control information of a receiving queue corresponding to the message data;
determining corresponding pre-fetched memory block scheduling information based on the pre-fetching control information;
performing a memory block pre-fetching scheduling operation on the receiving queue in a network card based on the pre-fetched memory block scheduling information, so as to generate a pre-fetching request to acquire corresponding memory block information; and
storing the message data in a memory of a storage area based on the memory block information.

2. The network card packet receiving processing method of claim 1, wherein determining corresponding pre-fetched memory block scheduling information based on the pre-fetching control information comprises:
acquiring a read pointer information and a write pointer information of a memory block pre-fetched by the receiving queue included in the pre-fetching control information; and
determining, in accordance with the read pointer information, the write pointer information and a pre-fetching pending flag bit, whether the current action of receiving the message data triggers a pre-fetching application action of the receiving queue, and if so, generating the corresponding pre-fetched memory block scheduling information.

3. The network card packet receiving processing method of claim 2, wherein after acquiring the read pointer information and the write pointer information, the method further comprises:
determining, based on the read pointer information and the write pointer information, whether a memory block to be used exists in a specified storage area, and if so, determining, in accordance with the read pointer information, the write pointer information and a corresponding queue serial number, a storage position of the memory block information in a network card memory pool, and reading the memory block information in the storage position.

4. The network card packet receiving processing method of claim 1, wherein performing a memory block pre-fetching scheduling operation on the receiving queue in a network card based on the pre-fetched memory block scheduling information, so as to generate a pre-fetching request to acquire corresponding memory block information comprises:
performing the memory block pre-fetching scheduling operation on the receiving queue in the network card based on the pre-fetched memory block scheduling information, and triggering a pre-fetching application action corresponding to a sub-queue in the receiving queue, so as to generate the pre-fetching request to acquire the corresponding memory block information; the receiving queue including at least one sub-queue;
wherein the pre-fetching request includes acquiring a corresponding number of pieces of memory block information in accordance with a preset threshold of a number of pieces of memory block information pre-fetched for a single time.

5. The network card packet receiving processing method of any of claims 1-4, wherein the pre-fetching control information includes: a write pointer value for representing a number of pre-fetched memory blocks, a read pointer value for representing a number of memory blocks that have been used to receive the message data, a pre-fetching pending flag bit for representing the current pre-fetching state of the receiving queue, and a notification instruction flag bit for representing driving of memory blocks that have been allocated.

6. A network card packet receiving processing apparatus, comprising:
a pre-fetching control information acquisition unit for parsing received message data, and determining pre-fetching control information of a receiving queue corresponding to the message data;
a packet receiving processing unit for determining corresponding pre-fetched memory block scheduling information based on the pre-fetching control information;
a memory block pre-fetching management unit for performing a memory block pre-fetching scheduling operation on the receiving queue in a network card based on the pre-fetched memory block scheduling information, so as to generate a pre-fetching request to acquire corresponding memory block information; and
a message data storage unit for storing the message data in a memory of a storage area based on the memory block information.

7. The network card packet receiving processing apparatus of claim 6, wherein the packet receiving processing unit comprises:
a first packet receiving processing unit for acquiring a read pointer information and a write pointer information of a memory block pre-fetched by the receiving queue included in the pre-fetching control information; and a third packet receiving processing unit for determining, in accordance with the read pointer information, the write pointer information and a pre-fetching pending flag bit, whether the current action of receiving the message data triggers a pre-fetching application action of the receiving queue, and if so, generating the corresponding pre-fetched memory block scheduling information.

8. The network card packet receiving processing apparatus of claim 7,
wherein the packet receiving processing unit further comprises: a second packet receiving processing unit for determining, based on the read pointer information and the write pointer information, whether a memory block to be used exists in a specified storage area, and if so, determining, in accordance with the read pointer information, the write pointer information and a corresponding queue serial number, a storage position of the memory block information in a network card memory pool, and reading the memory block information in the storage position.

9. An electronic device, comprising:
a processor; and
a memory, which stores a computer program executable on the processor, wherein the computer program, when executed by the processor, causes the electronic device to perform the steps of the network card packet receiving processing method according to any of claims 1 to 5.

10. A processor-readable storage medium, on which a computer program is stored, wherein the computer program, when executed by the processor, performs the steps of the network card packet receiving processing method according to any of claims 1 to 5.
